Europäisches Patentamt

European Patent Office

Office européen des brevets

(11) Publication number: **0 059 204 B1**

# EUROPEAN PATENT SPECIFICATION

(45) Date of publication of patent specification: **26.04.89**

(21) Application number: **81902463.9**

(22) Date of filing: **02.09.81**

(86) International application number:
**PCT/AU81/00125**

(87) International publication number:
**WO 82/00886 18.03.82 Gazette 82/08**

(51) Int. Cl.⁴: **G 01 M 13/00, G 01 M 13/02**

(54) **LIFE USAGE INDICATOR.**

(30) Priority: **03.09.80 AU 53/81**

(43) Date of publication of application:
**08.09.82 Bulletin 82/36**

(45) Publication of the grant of the patent:
**26.04.89 Bulletin 89/17**

(84) Designated Contracting States:
**DE FR GB SE**

(56) References cited:
**CH-A- 522 215
GB-A-1 374 107
GB-A-1 452 789
GB-A-1 586 491
US-A-3 482 440
US-A-3 527 086
US-A-3 584 057
US-A-3 911 746
US-A-4 031 366
US-A-4 112 747**

(73) Proprietor: **THE COMMONWEALTH OF
AUSTRALIA**
**c/o the Secretary Department of Industry and
Commerce Anzac Park West, Constitution
Avenue**
**Canberra Australian Capital Territory 2600 (AU)**

(72) Inventor: **KRIESER, Uri Ray**
**24 Wrixon Avenue**
**East Brighton, Vic 3187 (AU)**
Inventor: **FRASER, Ken Francis**
**4 Nambrook Close**
**Dingley, Vic. 3172 (AU)**

(74) Representative: **Crampton, Keith John Allen
et al**
**D YOUNG & CO 10 Staple Inn
London WC1V 7RD (GB)**

(56) References cited:
**AUTOMOBILTECHNISCHE ZEITSCHRIFT, vol. 1,
no. 1, January 1966, pages 20,21, Stuttgart, DE
H. STEINBRENNER: "Über eine Messtechnik
zur Ermittlung von Häufigkeitskollektiven von
Drehmoment und Drehzahl"**

Courier Press, Leamington Spa, England.

EP 0 059 204 B1

## Description

This invention relates to apparatus for determining the deterioration of a component operable over a range of operating conditions that result in component deterioration at different rates. In particular the present invention relates to apparatus for monitoring operation of components to enable reliable predictions of the remaining useful life of the components to be made.

The life expectancy of a machine component operable under different conditions (e.g. stress, pressure, temperature) may vary according to those conditions. A manufacturer may supply data in the form of tables or graphs relating operating conditions to recommended repair or replacement intervals or such data may be obtained by bench testing components to destruction, but such data can be tedious to use particularly if the relationship between a variable operating condition and life expectancy is nonlinear.

The present invention has been developed to monitor torque loading of gears in a helicopter gearbox, but is of more general usefulness. For example gas turbine discs are subject to stress failure and the present invention may be used for monitoring such components. However, it will be convenient to hereinafter describe the invention with particular reference to monitoring stress in transmission components of aircraft to enable estimations of safe fatigue life of such components to be made.

Components subject to high amplitude fluctuating loads may eventually undergo fatigue failure if a sufficiently high number of load cycles are applied before the component is replaced. In the simple arrangement of two gears in mesh each tooth will experience one load cycle per revolution of that gear. Under load a bending stress proportional to the torque transmitted will be developed at the gear root. For the gear the number of load cycles per unit time is given by the gear rotational speed. In the case of a gear tooth a fatigue failure is evidenced by a tooth crack or breakage. If gears are not subject to high loads there will be no tendency for fatigue failure to occur and life will then be limited by wear considerations.

Prediction of the safe life of such transmission components is of particular concern to aircraft operators as components must be replaced before failure occurs. Valid estimates of the safe life of helicopter transmission systems, apart from being vital for operational safety, are necessary for the formulation of an economic maintenance policy.

For fatigue life estimation of transmission components, two basic sets of data are required. Firstly gear fatigue data in the form of the number of cycles to failure as a function of stress level (S/N curve) is required together with a suitable stress or safety factor to define a "safe" curve. Secondly load spectra (giving proportion of operating time at various torque levels) must be available for the transmission under normal operating conditions. For helicopter transmissions computation of load cycles is simplified because gear rotational speed can be assumed to be constant.

Predictions of useful life of critical components in aircraft are presently carried out using a ground base digital computer. The predictions are made on the basis of operating data collected by measuring equipment on the aircraft and read manually at the end of each flight from the equipment. This is processed in the computer with fatigue data from the component manufacturer or from bench testing data to obtain an estimate of useful life of the components.

A disadvantage of prior art equipment is the need to manipulate relatively large amounts of data at frequent intervals. This procedure is not only time consuming and prone to error but necessitates use of equipment which is unnecessarily bulky due to the need to provide large displays for data. Prior art equipment additionally is not capable of providing continuous "on board" estimates of safe operating life of critical components.

European Patent Application Publication No. EP—A—0 002 232 describes apparatus for providing an indication of the physical condition of a device being monitored. The apparatus uses a measurement of vibration and particularly of the amplitude of vibration, and this constitutes a measurable result of component deterioration. The apparatus is capable of providing a spectrum analysis of the vibration and, derived from this, a trend analysis which involves plotting the vibration amplitude over a period of time and extrapolating a line of best fit to the points to some predetermined limit provided in a computer memory. The apparatus relies on detecting and measuring progressively a symptom of deterioration and extrapolating accordingly. Therefore, until an actual measurable deterioration has occurred, the trend analysis cannot provide any indication of the remaining useful life of the device.

United Kingdom Patent No. GB—A—1 586 491 describes apparatus which detects maxima and minima in engine speeds throughout a sortie. The apparatus determines from a look-up table the fatigue damage for the period between the occurrence of respective parts of maxima and minima. The precalculated and stored values of damage are an average for the respective maxima and minima values of the measured engine speeds. The estimated fatigue damage can only be an approximation based on this turning point detection technique since some assumption needs to be made about the speed curve between the respective maxima and minima.

According to the invention there is provided apparatus for determining the deterioration of a component, the component being operable over a range of operating conditions defined in part by a particular operating parameter, the component being normally subject to deterioration at different rates over a range of operating conditions so that the rate of deterioration of the component is dependent on the operating conditions subsisting at each instant in time, said component being arranged to have associated therewith an operating parameter monitor for providing a monitor signal representing a measure of the level of said operating parameter of the component, said apparatus including conditioning means for receiving said monitor signal and operative to condition said monitor signal for further processing, a memory having stored therein data for said component, and a calculator connected to receive said conditioned monitor signal and connected to said memory, characterised in that the memory is a deterioration data memory having stored therein expected deterioration data for said component for each of a plurality of mutually exclusive operating parameter level ranges, the calculator is a deterioration calculator operative to carry out a range determination comprising determining in which one of the operating parameter level ranges the measure of the level of said operating parameter represented by said conditioned monitor signal falls at that time instant, and said deterioration calculator is further operative to carry out a deterioration calculation which comprises calculating from the expected deterioration data in said memory and the said level range determination a first measure of estimated component deterioration, said calculator being further operative after known time intervals to repeat the operations of range determination and deterioration calculation so as to provide further measures of estimated component deterioration being measures of estimated component deterioration within said time intervals.

Apparatus embodying the present invention is capable of automatically and continuously determining the deterioration of a component operable over a range of operating conditions.

The deterioration calculator is operative to calculate the measure of component deterioration at known time intervals and each measure of component deterioration calculated constitutes an incremental deterioration since each respective immediately previous calculation. Also the time intervals are preferably constant and the conditioned monitor signal is updated at the constant time intervals, the memory having stored therein measures of deterioration of the component at increments of level of the operating parameter for the time intervals, the calculator being operative to determine which of the increments of level corresponds to the conditioned monitor signal and to retrieve the respective measure of deterioration from the memory.

The apparatus preferably further includes output display means connected to the deterioration calculator and operative to provide a cumulative indication of component deterioration.

The opening parameter monitor is preferably operable to generate an analogue signal representing the operating parameter level, and the conditioning means preferably includes an amplifier stage having a zero adjust means enabling the preselection of a non-zero monitor signal level below which the conditioned monitor signal represents a zero level of the operating parameter. The provision of zero adjust means enables preselection of a lower limit for the torque range of interest in the case of gear monitoring.

An embodiment of the present invention may be operative to determine the deterioration of two or more components, and therefore each of the components may be arranged to have a respective operating parameter monitor associated therewith, the conditioning means including a multiplexer for switching respective monitor signals to the deterioration calculator, the multiplexer being switchable at a predetermined channel select rate.

A preferred embodiment of the apparatus according to the present invention will now be described with reference to the accompanying drawings, in which:

Fig. 1 shows a block diagram of one preferred form of life usage indicating apparatus according to the present invention,

Fig. 2 shows one preferred form of operating parameter monitor suitable for use with the apparatus according to the present invention,

Fig. 3 shows one form of conditioning means,

Fig. 4 shows one form of deterioration data memory and deterioration calculator, and

Fig. 5 shows one form of output interface means, output means and reset signal generator according to the present invention.

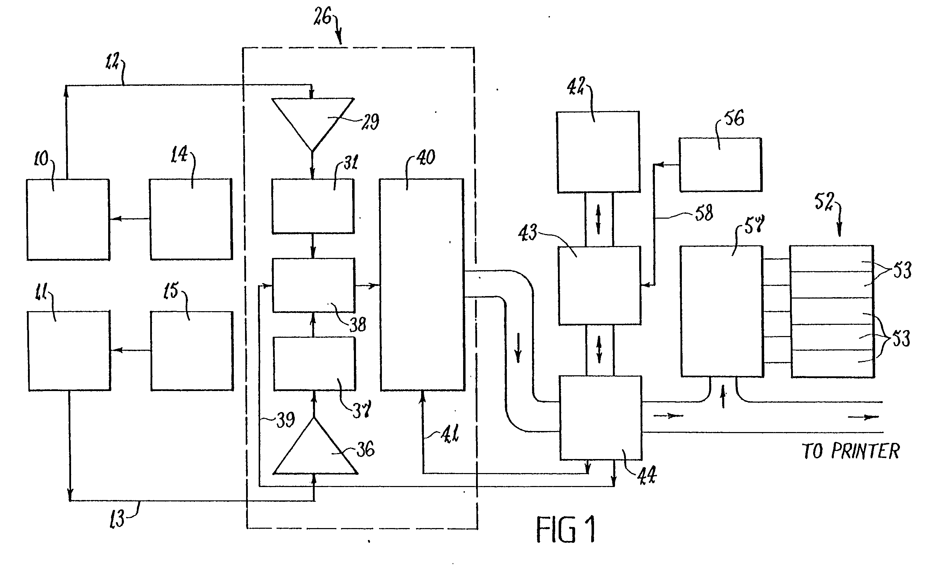

Referring to Fig. 1 the apparatus is for determining the deterioration of a helicopter gearbox component (not shown) operable over a range of torque loadings that result in component deterioration at different rates. The component is arranged to have associated therewith an operating parameter monitor 10 for providing an analogue monitor signal on line 12 representing the level of torque loading of the component.

The monitor 10 may be of any suitable construction and be installed at any convenient location. Helicopter manufacturers frequently design special gearboxes which make torque indication convenient. The torque-measuring system employed in some helicopters operates from a pressure being applied to vanes in the periphery of an annulus gear which forms part of an epicyclic gear train. The pressure is automatically adjusted to hold the annulus gear in equilibrium. In that case the pressure is proportional to the torque loading and in some aircraft the pressure signal is transmitted directly to pressure gauges mounted in the cockpit. These gauges thus serve as torquemeters.

To monitor torque for the apparatus of the present invention it has been found convenient to insert a "T" connection in the hydraulic torquemeter pressure line and attach a pressure transducer 10. A strain gauge type of transducer 10 is used.

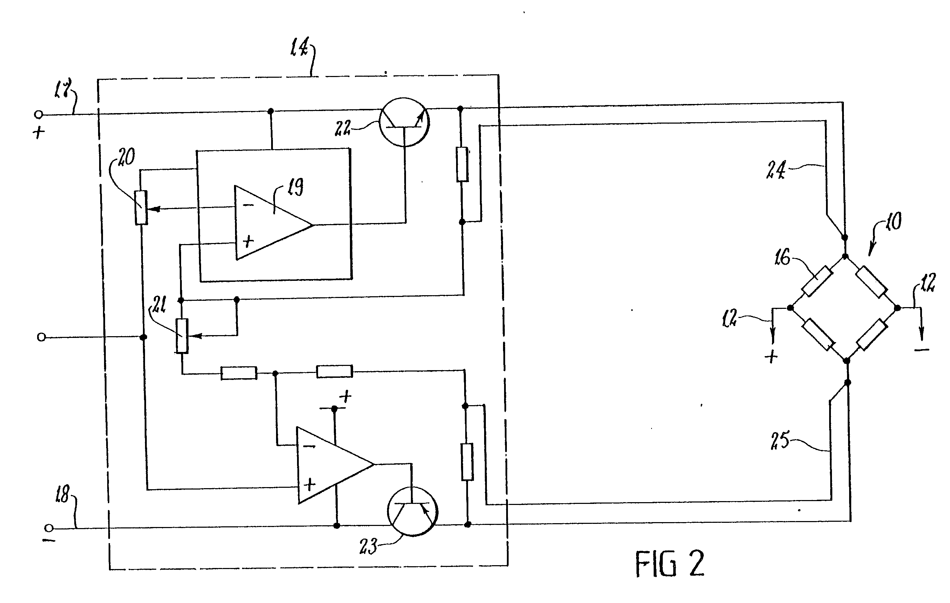

As shown in Fig. 2 the transducer 10 includes a resistive element 16, the resistance of which varies in proportion to the applied pressure. The transducer 10 comprises a Wheatstone bridge circuit, one arm of which includes the resistive element 16.

Because the strain gauge transducer 10 sensitivity is directly proportional to the bridge excitation voltage it is essential that a highly stable voltage supply 14 be used.

A voltage regulating circuit as shown in Fig. 2 is used to generate the required excitation. Input power is extracted through lines 17, 18 from the DC voltage supplies of the helicopter.

To reduce the common mode voltage to zero separate positive and negative supplies relative to signal common are generated. Such an arrangement has the advantage that any changes in common mode signal rejection with temperature in the following amplifier do not translate as zero shifts.

The highly stable LM723 is used as the voltage regulator 19. Excitation voltage level for both positive and negative outputs is set via potentiometer 20 and balance of the two supplies via potentiometer 21. Complimentary transistors 22, 23 provide output drive power for the transducer 10.

To allow the transducer excitation voltage to be precisely set, independently of the length of transducer connecting cable used, sense leads 24, 25 from each supply have been taken right to the transducer 10.

Returning to Fig. 1 the apparatus includes conditioning means 26 for receiving the monitor signal through line 12 and operative to condition the monitor signal for further processing. The conditioning means 26 includes an amplifier stage 27 having a zero adjust means 28 enabling the preselection of a non-zero monitor signal level below which the conditioned monitor signal represents a zero level of the torque loading of the gearbox component.

The amplifier stage 27 includes a pre-amplifier 29 of a differential input type and having low drift and excellent common mode rejection characteristics.

High frequency noise due to digital circuit switching and picked up on the incoming line 12 may produce a small DC offset in pre-amplifier 29 and therefore to eliminate this offset bypass capacitors 30 are incorporated in the input signal lines at the input of the pre-amplifier 29.

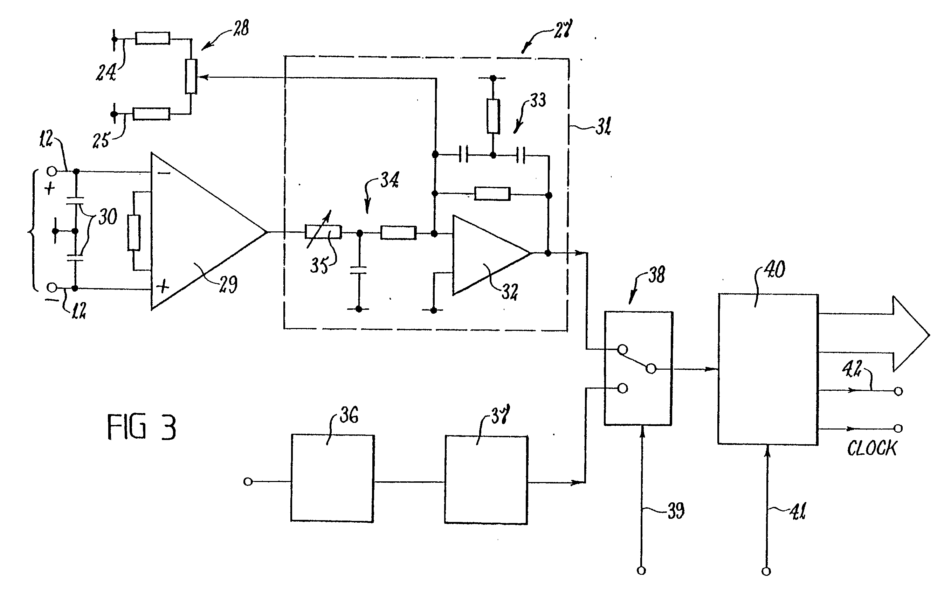

The conditioning means 26 also includes a filter stage 31 for limiting of the signal bandwidth to just above helicopter blade passing frequency (e.g. 17 Hz). In Fig. 3, filter stage 31 comprising amplifier 32 and associated components forms a low pass filter having, say, 3 dB bandwidth of 25 Hz.

The filter stage 31 includes a bridged—T filter 33 in feedback circuit and an input filter 34 including a gain trim resistance 35 (which has little effect on filter response). Gain of the filter stage 31 may be set to about 2.

The zero adjust means 28 takes care of any zero offset from the transducer 10 and allows the system zero to be accurately set to correspond to any desired rated torque. Because of the need for very high zero stability the well regulated sense leads 24, 25 from the transducer power generator 14 are used as supplies for the zero adjust means 28 as shown in Fig. 3.

The apparatus according to the present invention may be used to determine the deterioration of two or more components and each component would then be arranged to have a respective operating parameter monitor 10 associated therewith. As shown in Figs. 1 and 3, port and starboard engines of a twin engined helicopter may both be monitored and the second engine would have transducer 11 associated therewith supplied from voltage supply 15. The monitor signal is passed along line 13 to pre-amplifier 36 and through filter stage 37.

In this arrangement the conditioning means 26 includes a multiplexer 38 for switching respective monitor signals to subsequent stages, the multiplexer 38 being switchable at a predetermined channel select rate supplied through line 39. The multiplexer 38 may be a CMOS analogue switch.

The conditioning means 26 also includes an analogue to digital converter (ADC) 40 for converting the analogue monitor signal from the filter stage 31 (or 37) to a digital signal upon receiving a convert command signal through line 41. The ADC 40 may be in integrated circuit such as a Datel type HX 12BMR having the following characteristics:

(i) Conversion is performed using the successive approximation technique.

(ii) A full scale unipolar input range of 0 to 10 V is handled.

(iii) Output coding is complementary binary.

(iv) Resolution is 12-bit (1 part in 4096).

(v) A 12-bit parallel output and a serial output together with clock are available.

In the present application 100 conversions for both port and starboard channels may be performed per second.

Of the 12-bit output of the ADC 40 only the eight most significant bits may be needed by subsequent stages of the apparatus.

Alignment of the signal conditioning amplifiers 29, 31 is carefully performed to provide an overall sensitivity of 0.6% rated torque per bit as provided at the output of the ADC 40. Since the four lowest bits are not read by the subsequent stages the effective sensitivity relative to the 12-bit ADC output is

$$\frac{0.6}{16}$$

(equal to 0.0375) per cent rated torque per bit. The ADC 40 also generates a serial output 42, which may be used in conjunction with a circuit tester (not shown).

Referring again to Fig. 1 the apparatus also includes a deterioration data memory 42 having stored therein deterioration data for the component for a plurality of operating parameter levels, and a deterioration calculator 43 connected to receive the conditioned monitor signal from the ADC 40 (through interface means 44) and connected to the deterioration data memory 42, the deterioration calculator 43 being operative to calculate a measure of component deterioration.

In the preferred embodiment the deterioration calculator 43 is operative to calculate the measure of component deterioration at known time intervals and said measure of component deterioration calculated constitutes an incremental deterioration since each respective immediately previous calculation. The time intervals are preferably constant and the conditioned monitor signal is updated at the time intervals (according to the frequency of the convert command signals on line 41), the memory 42 having stored therein measures of deterioration of the component at increments of level of the operating parameter for the time intervals, and the calculator 43 being operative to determine which of the increments of level corresponds to the conditioned monitor signal and to retrieve the respective measure of deterioration from the memory 42.

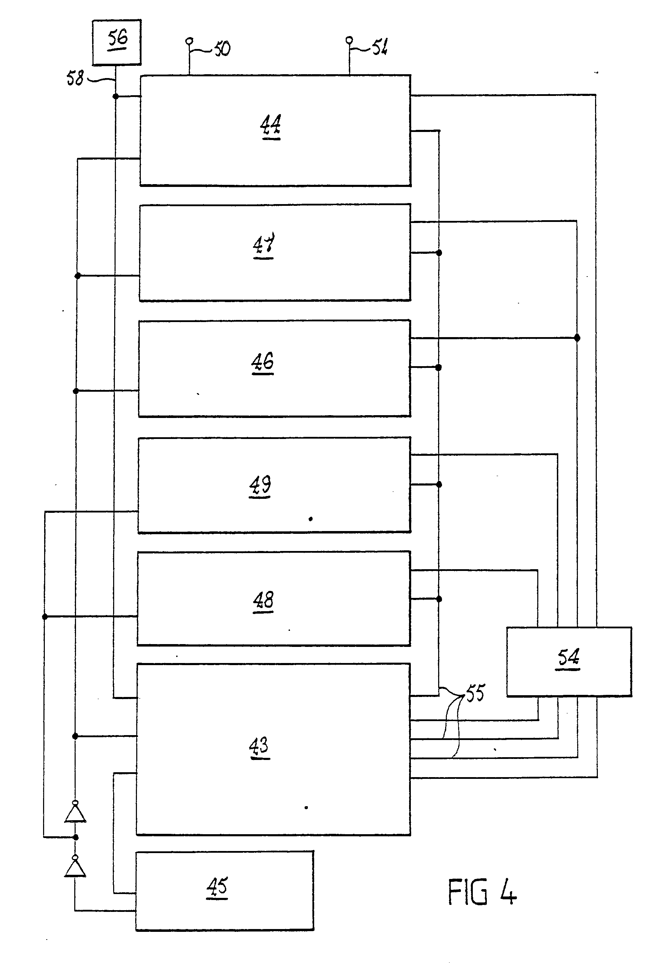

In the embodiment of Fig. 4 the memory 42, calculator 43 and interface means 44 are comprised by a microcomputer system chosen for in-flight computation of gear fatigue life usage and based on the Motorola MC 6800 microprocessing unit 43 (MPU) and associated components. This 8-bit processor 43 is suited to the present application which conveniently requires eight-bit input and eight-bit output digital data.

Crystal controlled clock signals at 1 MHz frequency are provided by generator 45.

Results of fatigue life usage computations performed during flight and other data required for post flight printout (described later) are stored in the 256 word (where 1 word≡8 bits) static random access memory (RAM) formed by 46 and 47. Read-only-memory (ROM) devices 48 and 49, which are of the ultra-violet light erasable type, allow for program storage of up to 4K (4096) words.

A single peripheral interface adaptor (PIA) 44 provides all input/output communication for the system.

The input 50 to PIA 44 comprises the eight lines carrying the significant bits of the output the ADC 40. Output 51 comprises eight output lines which may be used in two modes under program control. In a first mode, two of the lines may be used for the channel select signals on line 39 and the convert command signals on line 41. Four more may be used for four individual gear deterioration measure signals while a further line may provide total flying time signals. The remaining line indicates the mode of the output. In the second mode the first seven lines may carry stored data to a printer, the operation of which will be described later.

The apparatus includes output display means 52 connected to the deterioration calculator 43 and operative to provide a cumulative indication of component deterioration. The output display means 52 may comprise five electromechanical counters 53, four for individual gears of the transmission and the fifth for recording total flying time. As mentioned above five of the output lines 51 control the electromechanical counters 53 which can be actuated asynchronously under program control. The duration of the readout pulse is program controlled. Counters 53 for four gears are advanced by 1 for each micro-life unit expended and the total flying time counter is advanced by 1 for each second of flying time elapsed.

The apparatus may also include a printer (not shown) and when the flight is ended the mode of the output on line 51 may be automatically changed to initiate a printout. Alternatively a printout can be requested at any time by depressing a manual pushbutton (not shown).

These aspects of hardware operation relating to data input and output are controlled by the software which is described in more detail below.

In Fig. 4, decoder 54 provides simple selection of ROM 48, ROM 49, RAM 46, 47 or PIA 44 according to the logic levels applied to the address bus 55 from the MPU 43.

A reset signal generator 56 is provided to generate a reset signal automatically at helicopter "power-up", the reset signal being applied to the MPU 43 and PIA 44 for appropriate program initialization.

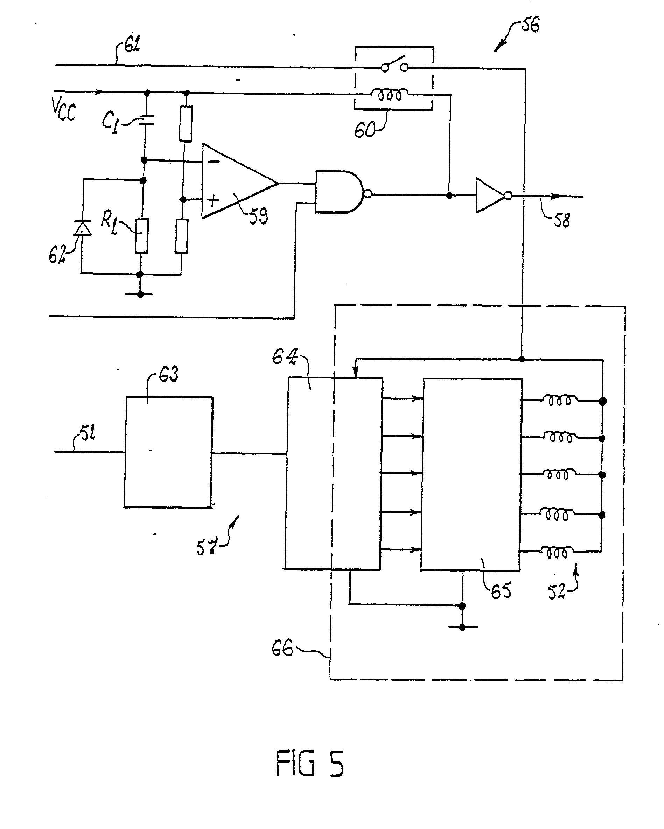

The reset signal generator 56 and driver 57 for the output display 52 means are shown in Fig. 5. This circuit performs two major functions:

(i) Automatic generation of a reset signal at power-up to initialize the microcomputer program sequence at the correct starting address, and

(ii) Provision of circuits to interface with external equipment and with electromechanical counters 53.

When power is first applied during the start-up sequence the Vcc (+5 V) regulator will take a small time to stabilize. During the stabilization period the behavior of the microcomputer is unpredictable. It is essential that the reset signal on line 58 be held low until stabilization is achieved. Transfer to the program starting address will occur at the instant the reset signal changes to the high state.

Voltage comparator 59 and associated components generate an appropriate reset signal when system power is first applied. At the instant of switch-on capacitor C1 will be discharged and hence the voltage level on the "−" input to the comparator 59 will be initially higher than that on the "+" input. After a delay period equal to 0.7 (C1) (R1) the comparator 59 will switch to its normal state and reset signal on line 58 will remain high thereafter. At the same time relay 60 will be energized and will transfer voltage from aircraft supply 61 to the electromechanical counters 53 and associated circuits. Diode 62 allows capacitor C1 to rapidly discharge through the circuits loading the Vcc (+5 V) regulator when main power is switched off.

The driver 57 includes a gating circuit 63 which is enabled during in-flight operation so as to gate signals on lines 51 (from PIA 44 in Fig. 4) via optical isolators 64 and Darlington transistor drivers 65 to the five electromechanical counters of display means 52. If the output mode line of output 51 changes state indicating that printing is in progress, the gating circuit 63 is operative to inhibit transfer of signals to display means 52. The optical isolators 64 prevent ground loop current flowing through the system, the ground loop isolation being shown by broken line 66 in Fig. 5.

Returning now to the operation of the calculator 43 and memory 42, as mentioned above the preferred arrangement comprises ROMs 48, 49 having a program and deterioration data stored therein. Functions of the program are:

(i) Real time computation and indication of fatigue life usage for the requisite (e.g. four) gears,

(ii) Real time indication of total flying time, (iii) Real time storage of basic torque data for post-flight printout,

(iv) Post-flight printout of basic torque band data together with gear fatigue life usage and flying time data for the current flight.

High torque measurement accuracy is essential but high measurement resolution is not. By utilizing the eight more significant bits of the 12-bit output of ADC 40 a resolution of 0.6% rated torque per bit results. Such resolution for torque measurement is quite adequate for high usage estimation purposes provided allowance is made for the mean under-estimate applicable to such measurements. To accommodate worst case conditions it must be possible to handle twin-engine total torque values above 120% and single-engine torque values above 150%. For the case of four gears of interest the factored endurance limits may vary from about 105% for one gear subject to total torque, to about 118% for other gears subject to individual engine torque. It follows that, based on 0.6% torque input resolution, the number of input values which need to be handled for fatigue life usage computation purposes will only be of the order of 50 for each of the test gears.

The demands on sampling rate are not very stringent although the system must respond up to blade passing frequency (17 Hz). For each "sample" both torque inputs must be read and the usage for each of the four gears computed. It has been demonstrated that a sampling rate of 100 Hz can be readily achieved so that value of sampling rate may be adopted.

Analytical computations for the fatigue life usage per sample for values of torque within the range of interest discussed above can be pre-computed and entered as values in "look-up tables" in ROMs 48, 49. Because all microcomputing systems are capable of very fast acquisition of values stored in tables such a method has been implemented in the present apparatus. That is, the deterioration data memory 42 constituted by part of the capacitor of ROMs 48, 49 has stored therein measures of fatigue life usage for each of a plurality of torque level increments and for 0.01 second duration, and the MPU 43 retrieves the appropriate life usage measure for each received conditioned monitor signal level.

The deterioration calculator (MPU 43) may be programmed to allocate internal or RAM space as a deterioration register for each component monitored and for storing a value of component deterioration (fatigue life usage). The calculated or retrieved measure of component deterioration for each time interval is added to the value in the register to provide an updated value of component deterioration. The calculator 43 is further operative to determine whether the updated value exceeds a predetermined unit of deterioration and, if so, to generate an appropriate output signal on lines 51 which is supplied to the output display means 52 to advance the respective counter 53 by one unit. The calculator 43 also reduces the updated value in the deterioration register by the unit of deterioration. In this way total fatigue life usage of each component is continuously updated and displayed by counters 53. When the readings on counters 53 approach a predetermined level the components can be serviced or replaced.

The calculator 43 is also programmed to allocate RAM space as a parameter level range memory for storing cumulatively the total time each component has operated in each of a plurality of mutually exclusive operating parameter ranges. That is, in the case of helicopter gear torque monitoring, there is memory space allocated for storing the total time that each gear has been operating in a particular range or band or torque values. The number of ranges or bands may be under program control. The calculator 43 is operative to determine in which one of the ranges the level of the operating parameter represented by the conditioned monitor signal falls for the instant time interval and to add the respective time interval to the total time stored in the respective range portion of the parameter level range memory. Automatically at the end of each flight, or upon manual push button command, the contents of the parameter level range memory may be printed enabling analysis of operating patterns of the components and regular or sampled cross-checking of the output displayed by counters 53 with computations carried out on the ground from the data printed out.

It will be seen that the apparatus described herein can be used to automatically determine and provide a permanent continuously updated display of accumulated life usage of components subject to deterioration at variable rates.

It will be appreciated that various modifications may be made to the apparatus described above with reference to the drawings. For example, where a component operates for relatively long periods of time under steady operating conditions, the time intervals between successive deterioration calculation may be variable and under the control of sensing means operative to initiate a conversion in ADC 40 and a deterioration calculation when a change in operating conditions is sensed. In this case, the memory 42 has stored therein measures of the rate of deterioration of the component at increments of level of the operating parameter, the calculator 43 being operative to determine which of the increments of level corresponds to the conditioned monitor signal and to retrieve the respective measure of deterioration rate from the memory and to calculate from the time elapsed since the previous calculation and from the retrieved measure of deterioration rate a measure of component deterioration. Thus the calculator 43 may be used during steady state conditions of the monitored component to perform other operations, but subject to interruption when a change in conditions is sensed.

## Claims

1. Apparatus for determining the deterioration of a component, the component being operable over a range of operating conditions defined in part by a particular operating parameter, the component being normally subject to deterioration at different rates over the range of operating conditions so that the rate of deterioration of the component is dependent on the operating conditions subsisting at each instant in time, said component being arranged to have associated therewith an operating parameter monitor (10) for providing a monitor signal representing a measure of the level of said operating parameter of the component, said apparatus including conditioning means (26) for receiving said monitor signal and operative to condition said monitor signal for further processing, a memory (42) having stored therein data for said component, and a calculator (43) connected to receive said conditioned monitor signal and connected to said memory (42), characterised in that the memory is a deterioration data memory (42) having stored therein expected deterioration data for said component for each of a plurality of mutually exclusive operating parameter level ranges, the calculator is a deterioration calculator (43) operative to carry out a range determination comprising determining in which one of the operating parameter level ranges the measure of the level of said operating parameter represented by said conditioned monitor signal falls at that time instant, and said deterioration calculator (43) is further operative to carry out a deterioration calculation which comprises calculating from the expected deterioration data in said memory (42) and said level range determination a first measure of estimated component deterioration, said calculator (43) being further operative after known time intervals to repeat the operations of range determination and deterioration calculation so as to provide further measures of estimated component deterioration being measures of estimated component deterioration within said time intervals.

2. Apparatus according to claim 1, wherein said time intervals are constant and said conditioned monitor signal is updated at said time intervals.

3. Apparatus according to claim 1, wherein said time intervals are variable and said conditioned monitor signal is updated at said time intervals.

4. Apparatus according to claim 1, claim 2 or claim 3, including output display means (52) connected to said deterioration calculator (43) and operative to provide a cumulative indication of component deterioration.

5. Apparatus according to claim 4, wherein said deterioration calculator (43) includes a deterioration register for storing a value of component deterioration, said calculated measure of component deterioration being added to the value in said register to provide an updated value of component deterioration, said calculator (43) being further operative to determine whether said updated value exceeds a predetermined unit of deterioration and, if so, to generate an output signal which is supplied to said output display means (52) and to reduce the updated value in said deterioration register by said unit of deterioration.

6. Apparatus according to claim 1, including a parameter level range memory for storing cumulatively the total time the component has operated in each of the plurality of mutually exclusive operating parameter level ranges, said calculator (43) being operative to determine in which one of the ranges the level of the operating parameter represented by said conditioned monitor signal falls for the instant time interval and to add the respective time interval to the total time stored in the respective range portion of the parameter level range memory, said apparatus including printing means for printing the total times stored in the parameter level range memory.

7. Apparatus according to any one of the preceding claims, wherein said operating parameter monitor (10) is operable to generate an analogue signal representing said level of said operating parameter, said conditioning means (26) including an amplifier stage (27, 29) having a zero adjust means (28) enabling the preselection of a non-zero monitor signal level below which the conditioned monitor signal represents a zero level of the operating parameter.

8. Apparatus according to claim 7, wherein said conditioning means (26) includes an analogue to digital converter (40) for converting said analogue signal to a digital signal upon receiving a convert command signal from said deterioration calculator (43).

9. Apparatus according to any one of the preceding claims, and operative to determine the deterioration of two or more components, each said component being arranged to have a respective operating parameter monitor (10, 11) associated therewith, said conditioning means (26) including a multiplexer (38) for switching respective monitor signals to said deterioration calculator (43), said multiplexer (38) being switchable at a predetermined channel select rate.

**Patentansprüche**

1. Vorrichtung zum Feststellen des Schlechterwerdens eines Bauelements, wobei das Bauelement über einen Bereich von Betriebsbedingungen betreibbar ist, der teilweise durch einen bestimmten Betriebsparameter festgelegt ist, und wobei das Bauelement normalerweise dem Schlechterwerden mit unterschiedlichen Geschwindigkeiten über den Bereich der Betriebsbedingungen derart unterliegt, daß die Verschlechterungsgeschwindigkeit des Bauelements von den zu jedem augenblicklichen Zeitpunkt herrschenden Betriebsbedingungen abhängig ist, wobei das Bauelement so angeordnet ist, daß ihm ein Betriebsparametermonitor (10) zugeordnet ist, mit welchem ein Monitorsignal erzeugbar ist, das einen Meßwert des Betriebsparameters des Bauelements darstellt, wobei die Vorrichtung eine Behandlungseinrichtung (26), mit der das Monitorsignal empfangbar und für die Weiterverarbeitung aufbereitbar ist, einen Speicher (42), in welchem die Daten für das Bauelement abgespeichert sind, und einen Rechner (43) aufweist, der für den Empfang des aufbereiteten Monitorsignals verbunden ist und mit dem Speicher (42) verbunden ist, dadurch gekennzeichnet, daß der Speicher ein Verschlechterungsdaten-Speicher (42) ist, in dem die erwarteten Verschlechterungsdaten für das Bauelement für jeden aus einer Mehrzahl von einander ausschließenden Betriebsparameterpegelbereichen abgespeichert sind, daß der Rechner ein Verschlechterungsrechner (43) ist, mit dem eine Bereichsfeststellung ausführbar ist, mit der feststellbar ist, in welchen der Betriebsparameterpegelbereiche der gemessene Betriebsparameterpegel, der durch das aufbereitete Monitorsignal dargestellt ist, zu diesem Zeitpunkt fällt, und daß mit dem Verschlechterungsrechner (43) ferner eine Verschlechterungsberechnung ausführbar ist, zu der ausgehend von den erwarteten Verschlechterungsdaten in dem Speicher und der Pegelbereichsbestimmung die Berechnung eines ersten Werts einer erwarteten Bauelementeverschlechterung gehört, wobei der Rechner (43) ferner nach bekannten Zeitabständen die Funktionen der Bereichsbestimmung und Verschlechterungsberechnung wiederholt, um damit weitere Werte für die geschätzte Bauelementeverschlechterung zu erzeugen, die Werte geschätzter Bauelementeverschlechterung innerhalb der Zeitabstände sind.

2. Vorrichtung nach Anspruch 1, dadurch gekennzeichnet, daß die Zeitabstände konstant sind und daß das aufbereitete Monitorsignal zu den Zeitabständen aktualisiert wird.

3. Vorrichtung nach Anspruch 1, dadurch gekennzeichnet, daß die Zeitabstände veränderlich sind und das aufbereitete Monitorsignal zu den Zeitabständen aktualisiert wird.

4. Vorrichtung nach Anspruch 1, 2 oder 3, gekennzeichnet durch eine Ausgabe-Anzeigevorrichtung (52), die mit dem Verschlechterungsrechner (43) verbunden ist und eine kumulative Anzeige der Bauelementeverschlechterung schafft.

5. Vorrichtung nach Anspruch 4, dadurch gekennzeichnet, daß der Verschlechterungsrechner ein Verschlechterungsregister für das Abspeichern eines Wertes der Bauelementeverschlechterung aufweist, wobei der berechnete Meßwert der Bauelementeverschlechterung zu dem Wert in dem Register addiert wird, um einen aktualisierten Wert der Bauelementverschlechterung zu schaffen, daß der Rechner (43) ferner feststellt, ob der aktualisierte Wert einen vorgegebenen Verschlechterungswert übersteigt, und, wenn dies der Fall ist, ein Ausgangssignal erzeugt, das zu der Ausgabe-Anzeigevorrichtung (52) geleitet wird, und den aktualisierten Wert in dem Verschlechterungsregister um die Verschlechterungseinheit vermindert.

6. Vorrichtung nach Anspruch 1, gekennzeichnet durch einen Parameterpegelbereichsspeicher für das kumulative Abspeichern einer Gesamtzeit, die das Bauelement in jeder einer Mehrzahl von einander ausschließenden Betriebsparameterpegelbereichen im Betrieb war, wobei der Rechner (43) feststellt, in welchem der Bereiche der Pegel des Betriebsparameters, der durch das aufbereitete Monitorsignal wiedergegeben ist, für einen vorgegebenen Zeitabstand fällt un je den Zeitabstand zu der Gesamtzeit addiert, die in dem. betreffenden Pegelbereich des Parameterpegelbereichsspeichers abgespeichert ist, und wobei die Vorrichtung eine Druckeinrichtung für die Druckausgabe der Gesamtzeiten aufweist, die in dem Parameterpegelbereichsspeicher abgespeichert sind.

7. Vorrichtung nach einem der vorhergehenden Ansprüche, dadurch gekennzeichnet, daß mit dem Betriebsparametermonitor (10) ein Analogsignal erzeugbar ist, das den Pegel der Betriebsparameter wiedergibt, daß die Behandlungseinrichtung (26) eine Verstärkerstufe (27, 29) mit einer Nullungseinrichtung aufweist, die die Vorauswahl eines von Null verschiedenen Monitorsignalpegels unterhalb des Pegels erlaubt, unter dem das aufbereitete Monitorsignal einen Nullpegel des Betriebsparameters wiedergibt.

8. Vorrichtung nach Anspruch 7, dadurch gekennzeichnet, daß die Behandlungseinrichtung (26) einen Analog/Digital-Wandler (40) für das Wandeln des Analogsignals in ein Digitalsignal beim Empfang eines Wandelbefehlssignals von dem Verschlechterungsrechner (43) aufweist.

9. Vorrichtung nach einem der vorhergehenden Ansprüche, dadurch gekennzeichnet, daß mit der Vorrichtung die Verschlechterung von zwei oder mehreren Bauelementen feststellbar ist, wobei das Bauelement so angeordnet ist, daß es einen entsprechenden, ihm zugeordneten Betriebsparametermonitor (10, 11) aufweist und daß die Behandlungseinrichtung (26) einen Multiplexerbaustein (38) für das Umschalten der betreffenden Monitorsignale zu dem Verschlechterungsrechner (43) aufweist, wobei der Multiplexerbaustein (38) mit einer vorgegebenen Kanalauswahlrate umschaltbar ist.

**Revendications**

1. Appareil pour déterminer la détérioration d'un élément utilisable dans une gamme de conditions de fontionnement partiellement définies par un paramètre de fonctionnement particulier, l'élément étant normalement soumis à une détérioration à des taux différents dans la gamme de conditions de fonctionnement de sorte que le taux de détérioration de l'élément est fonction des conditions de fonctionnement existant à chaque instant, l'élément étant agencé de manière à être associé à un dispositif de contrôle de paramètres de fonctionnement (10) destiné à produire un signal de contrôle représentant une mesure du niveau dudit paramètre de fonctionnement de l'élément, ledit appareil comprenant des moyens de prétraitement (26) destinés à recevoir et à prétraiter ledit signal de contrôle pour un traitement ultérieur, une mémoire (42) dans laquelle sont mémorisées des données pour ledit élément, et un calculateur (43) connecté de façon à recevoir ledit signal de contrôle prétraité, et connecté à ladite mémoire (42), caractérisé en ce que la mémoire est une mémoire de données de détérioration (42) dans laquelle sont mémorisées des données de détérioration escomptée pour ledit élément pour chacune de plusieurs gammes de niveaux de paramètres de fonctionnement mutuellement exclusives, en ce que le calculateur est un calculateur de détérioration (43) destiné à effectuer une détermination de gamme consistant à déterminer dans laquelle des gammes de niveaux de paramètres de fonctionnement tombe, à cet instant, la mesure du niveau dudit paramètre de fonctionnement représentée par ledit signal de contrôle prétraité, et en ce que le calculateur de détérioration (43) est en outre adapté pour effectuer un calcul de détérioration comprenant le calcul d'une première mesure de détérioration escomptée de l'élément à partir des données de détérioration escomptée dans ladite mémoire (42) et ladite détermination de gamme de niveaux, ledit calculateur (43) étant en outre adapté après des intervalles de temps connus pour répéter les opérations de détermination de gamme et le calcul de détérioration de façon à produire des mesures ultérieures de la détérioration escomptée de l'élément qui sont des mesures de détérioration escomptée de l'élément dans lesdits intervalles de temps.

2. Appareil suivant la revendication 1, dans lequel lesdits intervalles de temps sont constants et ledit signal de contrôle prétraité est mis à jour auxdits intervalles de temps.

3. Appareil suivant la revendication 1, dans lequel lesdits intervalles de temps sont variables et ledit signal de contrôle prétraité est mis à jour auxdits intervalles de temps.

4. Appareil suivant l'une des revendications 1 à 3, comprenant des moyens d'affichage de sortie (52) connectés audit calculateur de détérioration (43) et adaptés pour fournir une indication cumulative de la détérioration de l'élément.

5. Appareil suivant la revendication 4, dans lequel ledit calculateur de détérioration (43) comporte un registre de détérioration pour la mise en mémoire d'une valeur de détérioration d'élément, ladite mesure de détérioration d'élément calculée étant additionnée à la valeur dans ledit registre afin de fournir une valeur de détérioration d'élément mise à jour, ledit calculateur (43) étant en outre destiné à déterminer si ladite valeur mise à jour est supérieure à une unité prédéterminée de détérioration et, dans ce cas, générer un signal de sortie transmis auxdits moyens d'affichage de sortie (52) et de réduire la valeur mise à jour dans ledit registre de détérioration de ladite unité de détérioration.

6. Appareil suivant la revendication 1, comprenant une mémoire de gammes de niveaux de paramètres destinée à la mémorisation cumulative du temps total pendant lequel l'élément a fonctionné dans chacune des gammes de niveaux de paramètres de fonctionnement mutuellement exclusives, ledit calculateur (43) étant destiné à déterminer dans laquelle des gammes tombe, dans cet intervalle de temps, le niveau du paramètre de fonctionnement représenté par ledit signal de contrôle prétraité, et pour additionner l'intervalle de temps respectif au temps total mémorisé dans la portion de gamme respective de la mémoire de gammes de niveaux de paramètres, ledit appareil comprenant un dispositif d'impression destiné à imprimer comprenant un dispositif d'impression destiné à imprimer les temps totaux mémorisés dans la mémoire de gammes de niveaux de paramètres.

7. Appareil suivant l'une quelconque des revendications précédentes, dans lequel ledit dispositif de contrôle de paramètre de fonctionnement (10) est destiné à produire un signal analogique représentant ledit niveau dudit paramètre de fonctionnement, lesdits moyens de prétraitement (26) comprenant un étage d'amplification (27, 29) pourvu de moyens de réglage du zéro (28) permettant la présélection d'un niveau de signal de contrôle non nul au-dessous duquel le signal de contrôle prétraité représente un niveau de zéro du paramètre de fonctionnement.

8. Appareil suivant la revendication 7, dans lequel lesdits moyens de prétraitement (26) comprennent un convertisseur analogique-numérique (40) destiné à convertir ledit signal analogique en un signal numérique lors de la réception d'un signal de commande de conversion issu du calculateur de détérioration (43).

9. Appareil suivant l'une quelconque des revendications précédentes destiné en outre à déterminer la détérioration d'au moins deux éléments, chaque élément étant pourvu d'un dispositif de contrôle de paramètres de fonctionnement associé (10, 11), lesdits moyens de prétraitement (26) comprenant un multiplexeur (38) destiné à commuter les signaux de contrôle respectifs vers ledit calculateur de détérioration (43), ledit multiplexeur (38) étant commutable à une vitesse de sélection de canaux prédéterminée.

FIG 1

EP 0 059 204 B1

FIG 2

FIG 3

EP 0 059 204 B1

EP 0 059 204 B1

FIG 4

FIG 5